# EUROPEAN PATENT APPLICATION

(11) **EP 1 915 900 A1**
(43) Date of publication of application: **30.04.2008**
(21) Application number: 07119152.2
(22) Date of filing: 24.10.2007
(51) Int. Cl.: A01G 9/14

(54) **Greenhouse**

(30) Priority: 25.10.2006 NL 2000289
(71) Applicant: Excellent Glastuinbouwsystemen B.V., 2291 EE Wateringen (NL)
(72) Inventor: Zwinkels, Theodorus Adrianus Maria, 2291 EE, Wateringen (NL); Van der Heijden, Ludovicus Josephus, 2291 EE, Wateringen (NL)
(74) Representative: Hooiveld, Arjen Jan Winfried

(57) **Abstract**

A greenhouse comprising at least one gutter section and a roof extending from said gutter section, which roof comprises a ridge section as well as spaced-apart glazing bars, which are connected to an edge of the gutter section near one end and to the ridge section near the other end, whilst panes are mounted between adjacent glazing bars, which panes are supported in rebates in the glazing bars and in a rebate in the gutter section, characterised in that a pressure-distributing element is provided in the rebate in the gutter section, which pressure-distributing element is capable of deformation from an unloaded position, in which a pane can be placed between legs of the pressure-distributing element, to a loaded position, in which the legs of the pressure-distributing element are pressed against the pane.

## Description

The invention relates to a (Dutch) greenhouse comprising at least one gutter section and a roof extending from said gutter section, which roof comprises a ridge section as well as spaced-apart glazing bars, which are connected to an edge of the gutter section near one end and to the ridge section near the other end, whilst panes are provided between adjacent glazing bars, which panes are supported in rebates in the glazing bars and in a rebate in the gutter section. The invention also relates to a method for constructing such a greenhouse.

It is noted that in practice the term "greenhouse" is generally used for an agricultural and/or horticultural greenhouse suitable for cultivating vegetables, fruit or flowers and the like.

Such a greenhouse is generally known and described in particular in Dutch patent publication No. 89.02603 (P.L.J. Bom Beheer B.V.). The greenhouse discussed therein is built up of columns, gutters of tubular cross-section supported by said columns, and of a sloping roof consisting of a ridge section, glazing bars and panes, which extends between two gutters. Said gutters and said glazing bars form structural elements which are to take up the weight of the roof plus any wind and snow loads.

A general drawback of a greenhouse of the type as referred to in the introduction, among which the greenhouse that is known from the aforesaid Dutch patent specification, is the following. In practice it has become apparent that breaking panes may lead to perilous situations, both during the installation of the panes (the so-called "glazing") and during use of such a greenhouse: falling, sharp and heavy pane fragments may cause critical or even mortal injury to personnel working in the greenhouse. To reduce said risks to a certain extent, panes of hardened glass are often used, but the risk of pane breakage is not excluded in such a case, with all its adverse consequences. So far a solution to the problem of pane breakage has not been found.

The object of the invention is to obviate the above drawback of the prior art, more particularly to provide a greenhouse in which the risk of pane breakage (during the glazing and during use of the greenhouse) has been reduced to acceptable proportions. In order to accomplish that object, a greenhouse of the kind referred to in the introduction is according to the invention characterised in that a pressure-distributing element is provided in the rebate in the gutter section, which pressure-distributing element is capable of deformation from an unloaded position, in which a pane can be placed between legs of the pressure-distributing element, to a loaded position, in which the legs of the pressure-distributing element are pressed against the pane. The pressure-distributing element functions as a support surface for the pane so as to locally distribute the weight thereof in such a manner that no point loads will occur in the pane at that location, not only during installation of the panes but also, for example, when the panes are being cleaned manually or mechanically after some time. Extensive tests have shown that the risk of pane breakage has thus been virtually excluded, as a result of which it has in particular become readily possible to insure the present greenhouse at low cost. The pressure-distributing element furthermore prevents the panes from being "sucked up" by heavy winds. In the unloaded position, i.e. when the pressure-distributing element is not loaded for pressure, the pane can be easily installed between the legs of the pressure-distributing element with some play, whereas in the loaded condition (i.e. in the situation in which the pressure-distributing element is loaded for pressure), the pane is firmly clamped between the legs of the pressure-distributing element.

It is noted that the invention is not limited to panes made of hardened glass, but that the invention also extends to panes of other (transparent) materials, such as common glass, plastic and the like. In the light of the risk of pane breakage it is preferable, however, to use panes made of hardened glass.

In a preferred embodiment of a greenhouse according to the invention, the pressure-distributing element can be deformed by means of a pressure member to be attached to the gutter section, which pressure member exerts a load on the pressure-distributing element in the mounted condition thereof. In the unloaded position of the pressure-distributing element, at least one leg thereof extends outwards, whilst in the loaded position of the pressure-distributing elements said leg is pressed inwards by the pressure member, so that the legs are firmly pressed against the pane. The pressure member is in particular a gutter cover to be (detachably) attached to the gutter section.

In another preferred embodiment of a greenhouse according to the invention, the pressure-distributing element is plastically or elastically deformable. In a preferred variant comprising an elastically deformable pressure element, the legs can return to their starting position (i.e. the position prior to the placement of the pressure member) after deformation (i.e. after the pressure member has been attached to the gutter section), whereas this is not possible in the case of plastic deformation.

In another preferred embodiment of a greenhouse according to the invention, the pressure-distributing element has an at least substantially C-shaped cross-section. In another preferred variant, the pressure-distributing element has an at least substantially W-shaped cross-section. This makes it possible to compensate an oblique position of the steel structure of the present greenhouse caused by temperature fluctuations (blazing sun during the day, cold during the night) and thus prevent panes breaking or falling out. The W-shape ensures that said compensation is taken up in a "harmonica-like" manner by compression thereof. In this way a "rattle-free", adequate support of the panes in the rebates is ensured.

In another preferred embodiment of a greenhouse according to the invention, the pressure-distributing element at least substantially abuts against an inner side of the glazing bar rebate. More in particular, the glazing bar rebate has an at least substantially U-shaped cross-section, whilst the pressure-distributing element extends at least substantially only from one leg to the other leg of the U-shape. In other words, the pressure-distributing element forms an inner liner of the rebate, as it were, and does not extend outside the rebate.

In another preferred embodiment of a greenhouse according to the invention, the pressure-distributing element is at least substantially made of a material having thermal insulation properties. The thermally insulating pressure-distributing element prevents the formation of thermal bridges at the location of the rebates. Preferably, the pressure-distributing element is at least substantially made of a material having water-sealing properties. In that case the pressure-distributing element will function as a seal, therefore, to prevent (rain) water and dirt from outside finding their way into the greenhouse past the panes.

In another preferred embodiment of a greenhouse according to the invention, the pressure-distributing element is at least substantially made of a material having sound insulation properties. In this way a low-noise roof construction is obtained.

In another preferred embodiment of a greenhouse according to the invention, the pressure-distributing element is at least substantially made up of a rubber section, which is preferably non-shrinkable.

The invention also relates to a pressure-distributing element apparently suitable for use in the greenhouse according to the invention.

As already noted before, the invention also relates to a method for constructing a greenhouse according to the invention, wherein a roof extending from at least one gutter section is built up of a ridge section and spaced-apart glazing bars, which glazing bars are connected to an edge of the gutter section near one end and to the ridge section near the other end, whilst panes are installed between adjacent glazing bars, which panes are supported in rebates in the glazing bars and in a rebate in the gutter section, characterised in that a pressure-distributing element is mounted in the rebate in the gutter section, which pressure-distributing element is deformed from an unloaded position, in which a pane is placed between legs of the pressure-distributing element, to a loaded position, in which the legs of the pressure-distributing element are pressed against the pane.

The invention will now be explained with reference to figures illustrated in a drawing, in which
- figure 1 is a schematic and perspective view of a part of a roof of a greenhouse according to the invention;
- figure 2 is a sectional view of a gutter section along the line II-II in figure 1, in which figures 2A-2E show various mounting steps.

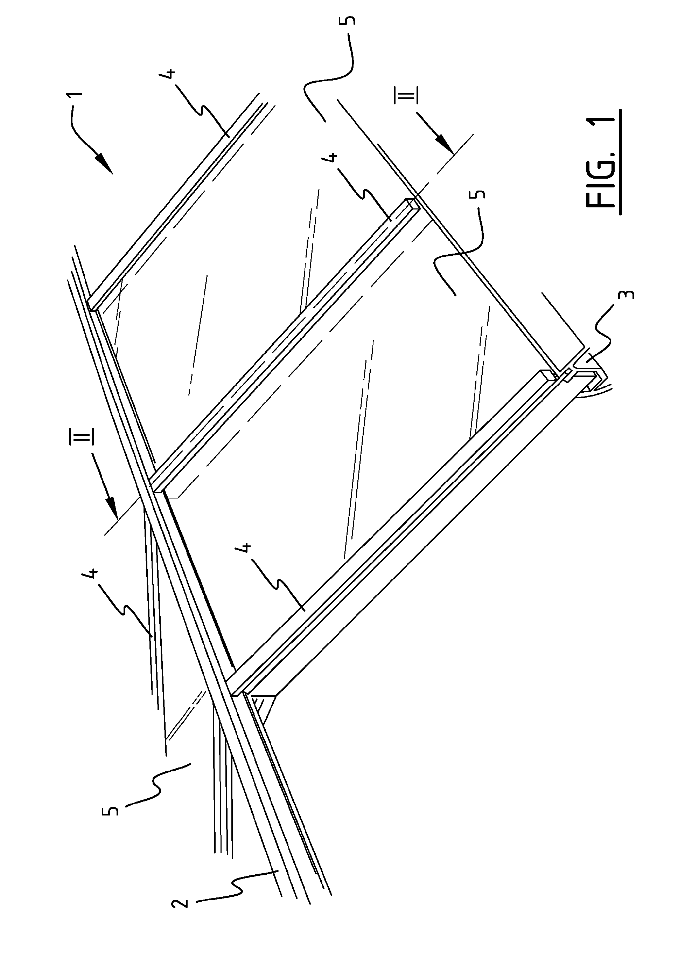

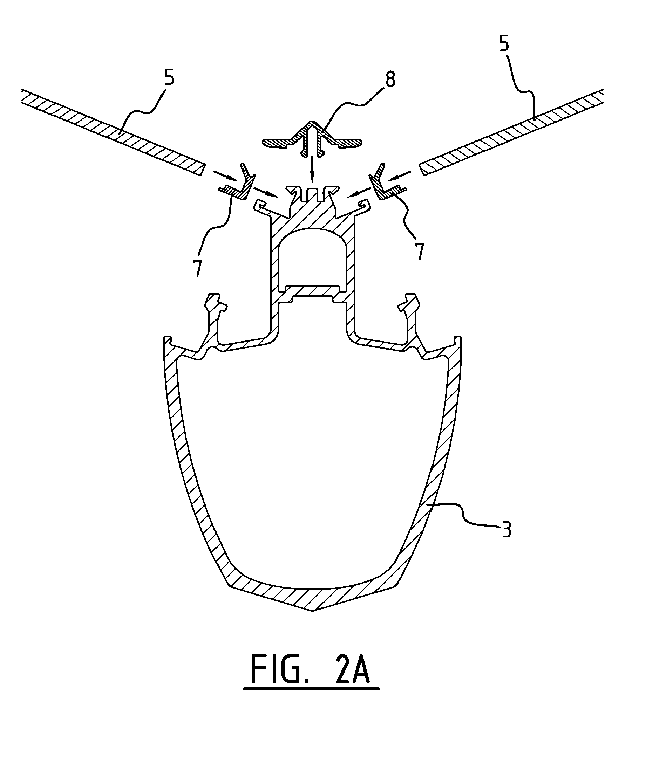

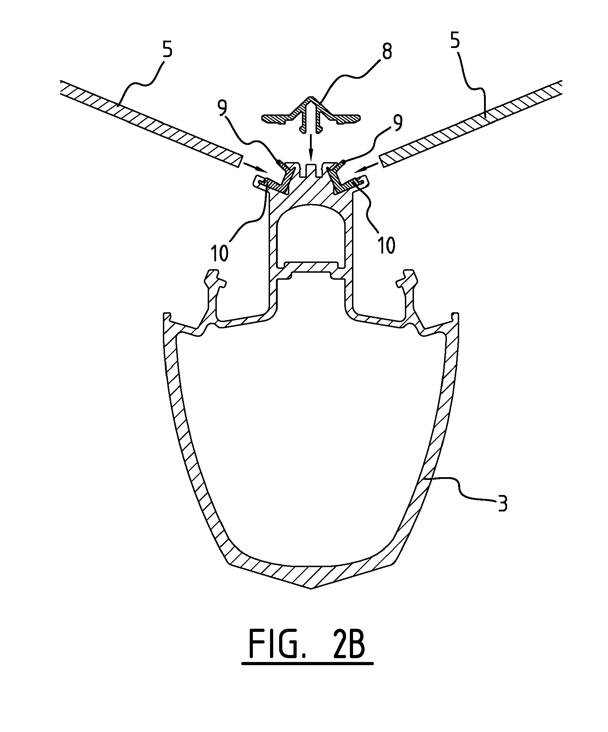

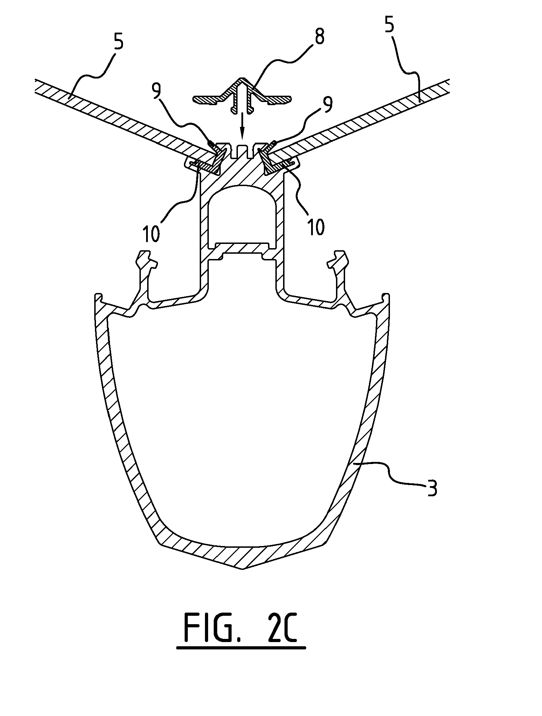

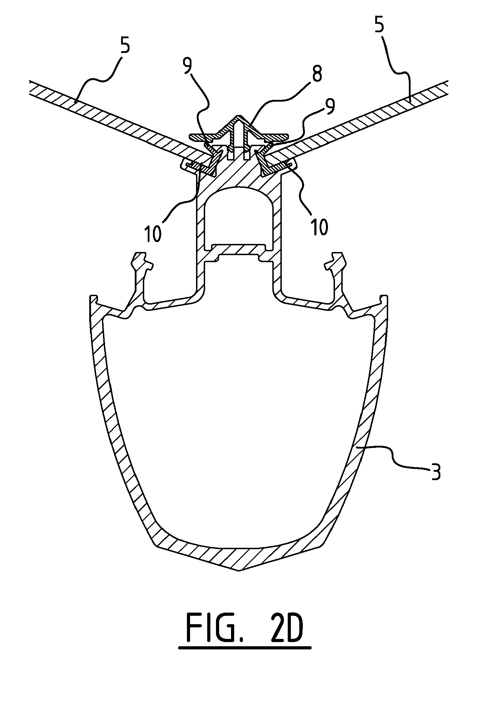

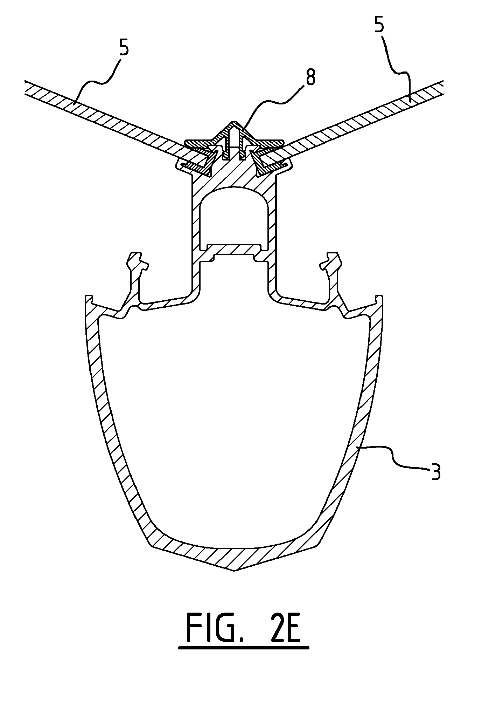

Figure 1 shows an agricultural or horticultural greenhouse, the inclined roof 1 of which is built up of a ridge section 2 extending in the longitudinal direction of the greenhouse and glazing bars 4 mounted on either side of the ridge section 1, which are supported on gutter sections 3. The gutter sections 3 have a tubular cross-section and are in turn supported on columns (not shown). Panes 5 of hardened glass are mounted between adjacent glazing bars 4, in such a manner that said panes 5 are supported in lateral rebates of the glazing bars 4, between the upper flanges and lower flanges of the ridge section 2, and in lateral rebates 6 of the gutter sections 3 (see figure 2). The upper and lower flanges are connected to a web of the ridge section 2 at a downwardly inclined angle.

Referring to figure 2E, the lateral rebates 6 of each gutter section 3 are lined with a rubber section 7 of C-shaped cross-section. The rubber section 7 primarily functions as a pressure-distributing support surface for the panes 5, but it also functions to seal the panes 5 against water and dirt. The rubber section 7 furthermore functions as a thermal insulation element to prevent the formation of thermal bridges across parts of the gutter sections 3. It will be understood that the rubber sections 7 provide a "rattle-free" support for the panes 5 in the lateral rebates 6. The rubber sections 7 are coloured white at the upper (sun) side to provide reflection.

Figure 2A shows the gutter section 3 used in figure 1 in exploded view, in which the panes 5, the rubber sections 7 and a pressure member 8 are shown as separate parts, which are to be mounted in the direction indicated by the arrows. In the first place, the rubber sections 7 of C-shaped cross-section are laid in the lateral rebates 6, at which point the rubber sections 7 are not loaded for pressure (yet) and are thus in unloaded position (figure 2B). As figure 2B shows, the C-shaped cross-section comprises two legs 9,10. The upper leg 9 extends slightly outwards in unloaded position (figure 2B), so that the panes 5 can be easily placed in a channel-shaped space formed between the legs 9,10 with the edges thereof (figure 2C). In the situation shown in figure 2C, the rubber sections 7 are still in their unloaded position, with the upper leg 9 extending slightly outwards. Then the pressure member 8 functioning as a cover for the gutter section 3 is clampingly attached to the gutter section 3 by means of a snap or clip connection (figure 2D) under elastic deformation of the rubber sections 7 (figure 2E). More in particular, the upper legs 9 of said rubber sections are pressed inwards, so that the two legs 9,10 of the rubber sections 7 are pressed against the panes 5 to form a watertight seal.

It is noted that the invention is not limited to the embodiment shown herein, but that it also extends to other variants that fall within the scope of the appended claims.

## Claims

1. A greenhouse comprising at least one gutter section and a roof extending from said gutter section, which roof comprises a ridge section as well as spaced-apart glazing bars, which are connected to an edge of the gutter section near one end and to the ridge section near the other end, whilst panes are mounted between adjacent glazing bars, which panes are supported in rebates in the glazing bars and in a rebate in the gutter section, **characterised in that** a pressure-distributing element is provided in the rebate in the gutter section, which pressure-distributing element is capable of deformation from an unloaded position, in which a pane can be placed between legs of the pressure-distributing element, to a loaded position, in which the legs of the pressure-distributing element are pressed against the pane.

2. A greenhouse according to claim 1, wherein the pressure-distributing element can be deformed by means of a pressure member to be mounted to the gutter section, which pressure member exerts a load on the pressure-distributing element in the mounted condition thereof.

3. A greenhouse according to claim 1 or 2, wherein the pressure-distributing element is elastically deformable.

4. A greenhouse according to claim 1 or 2, wherein the pressure-distributing element is plastically deformable.

5. A greenhouse according to any one of the preceding claims 1-4, wherein the pressure-distributing element has an at least substantially C-shaped cross-section.

6. A greenhouse according to any one of the preceding claims 1-5, wherein the pressure-distributing element has an at least substantially W-shaped cross-section.

7. A greenhouse according to any one of the preceding claims 1-6, wherein the pressure-distributing element at least substantially abuts against an inner side of the glazing bar rebate.

8. A greenhouse according to any one of the preceding claims 1-7, wherein the pressure-distributing element is at least substantially made of a material having thermal insulation properties.

9. A greenhouse according to any one of the preceding claims 1-8, wherein the pressure-distributing element is at least substantially made of a material having sound insulation properties.

10. A greenhouse according to any one of the preceding claims 1-9, wherein the pressure-distributing element is at least substantially made of a material having water-sealing properties.

11. A greenhouse according to any one of the preceding claims 1-10, wherein the pressure-distributing element is at least substantially made up of a rubber section.

12. A pressure-distributing element apparently suitable for use in a greenhouse according to any one of the preceding claims 1-11.

13. A method for constructing a greenhouse according to any one of the preceding claims 1-11, wherein a roof extending from at least one gutter section is built up of a ridge section and spaced-apart glazing bars, which glazing bars are connected to an edge of the gutter section near one end and to the ridge section near the other end, whilst panes are installed between adjacent glazing bars, which panes are supported in rebates in the glazing bars and in a rebate in the gutter section, **characterised in that** a pressure-distributing element is mounted in the rebate in the gutter section, which pressure-distributing element is deformed from an unloaded position, in which a pane is placed between legs of the pressure-distributing element, to a loaded position, in which the legs of the pressure-distributing element are pressed against the pane.

14. A method according to claim 13, wherein the pressure-distributing element is formed by attaching a pressure member to the gutter section, and wherein the pressure-distributing element is loaded by the pressure member in mounted condition.
